# FASCICULE DE BREVET EUROPEEN

(11) **EP 2 523 753 B1**
(45) Date de publication et mention de la délivrance du brevet: **25.06.2014**
(21) Numéro de dépôt: 11700062.0
(22) Date de dépôt: 10.01.2011
(51) Int. Cl.: B01J 19/00, B01F 5/06, B01F 13/00, B01F 15/06, F28D 7/00

(54) **DISPOSITIF FORMANT REACTEUR CHIMIQUE A EFFICACITE AMELIOREE INTEGRANT UN CIRCUIT D'ECHANGE THERMIQUE**
VORRICHTUNG ZUR HERSTELLUNG EINES CHEMISCHEN REAKTORS MIT ERHÖHTER LEISTUNGSFÄHIGKEIT MIT EINER WÄRMETAUSCHERSCHALTUNG
DEVICE FORMING A CHEMICAL REACTOR WITH IMPROVED EFFICIENCY, COMPRISING A HEAT EXCHANGING CIRCUIT

(30) Priorité: 11.01.2010 FR 1050132
(43) Date de publication de la demande: 21.11.2012
(73) Titulaire: Commissariat à l'Énergie Atomique et aux Énergies Alternatives, 75015 Paris (FR)
(72) Inventeur: COUTURIER, Raphaël, F-38360 Sassenage (FR); BERNARD, Charlotte, F-74130 Contamine Sur Arve (FR); LEIBOLD, Jean-Marc, F-38800 Pont De Claix (FR); TOCHON, Patrice, F-38140 Uriage (FR); VIDOTTO, Fabien, F-38600 Fontaine (FR)
(74) Mandataire: Ilgart, Jean-Christophe
(86) Numéro de dépôt international: PCT/EP2011/050215
(87) Numéro de publication internationale: WO 2011/083163

(56) Documents cités:
- EP-A1- 1 854 536
- EP-A2- 1 767 886
- WO-A1-2008/121390
- US-A1- 2009 245 017
- LUO ET AL: "Constructal approach and multi-scale components", APPLIED THERMAL ENGINEERING, PERGAMON, OXFORD, GB LNKD- DOI:10.1016/J.APPLTHERMALENG.2006.07.018, vol. 27, no. 10, 29 mars 2007 (2007-03-29) , pages 1708-1714, XP022004450, ISSN: 1359-4311

## Description

### DOMAINE TECHNIQUE ET ART ANTÉRIEUR

La présente invention se rapporte à un dispositif comportant au moins un premier circuit destiné à assurer la circulation d'un fluide actif, par exemple à permettre une réaction chimique entre au moins deux réactifs chimiques contenus dans ledit fluide, et au moins un deuxième circuit assurant un apport de chaleur au premier circuit ou une extraction du premier circuit, et à un procédé de réalisation d'un tel dispositif.

Le document « Topologic mixing on a microfluidic chip », H. Chen and J-C Meiners, dans Applied Physics Letters, Vol. 84, Number 12, pages 2193-2195, 22 mars 2004 décrit un circuit de mélange particulièrement performant, dans lequel le flux de liquide est divisé en deux flux puis rassemblé, et ceci de manière périodique. Lorsque le flux est divisé en deux, celui-ci subit un changement de direction. Ces trajectoires particulières imposées aux particules de fluides provoquent des mouvements chaotiques en écoulement laminaire. Ces géométries permettent ainsi de parvenir rapidement à un certain degré de mélange. De plus, il n'y pas de court-circuit et très peu de zones mortes dans les coudes du circuit.

Une autre architecture de circuit de mélange est également décrite dans le document « nouvel interconnection technologies for integrated microfluidic systems », N.L. Gray and al., dans « Sensors and Actuators » 77(1999) 57-65*.*

Ces structures sont très efficaces pour réaliser des mélanges, et sont notamment utilisées dans le domaine des sciences de la vie pour effectuer des mélanges.

On pourrait envisager d'utiliser ces structures comme réacteurs chimiques puisqu'elles assurent un mélange intime des réactifs chimiques et donc un rendement amélioré. Cependant, pour une telle utilisation, il faut pouvoir extraire, de manière efficace, la chaleur du circuit afin de ne pas freiner les réactions et d'éviter un emballement thermique. Il peut également être intéressant de pouvoir apporter de la chaleur au plus près du circuit afin d'initier et/ou d'accélérer la réaction. Les dispositifs actuels ne comportent pas de moyens efficaces pour assurer de tels échanges thermiques.

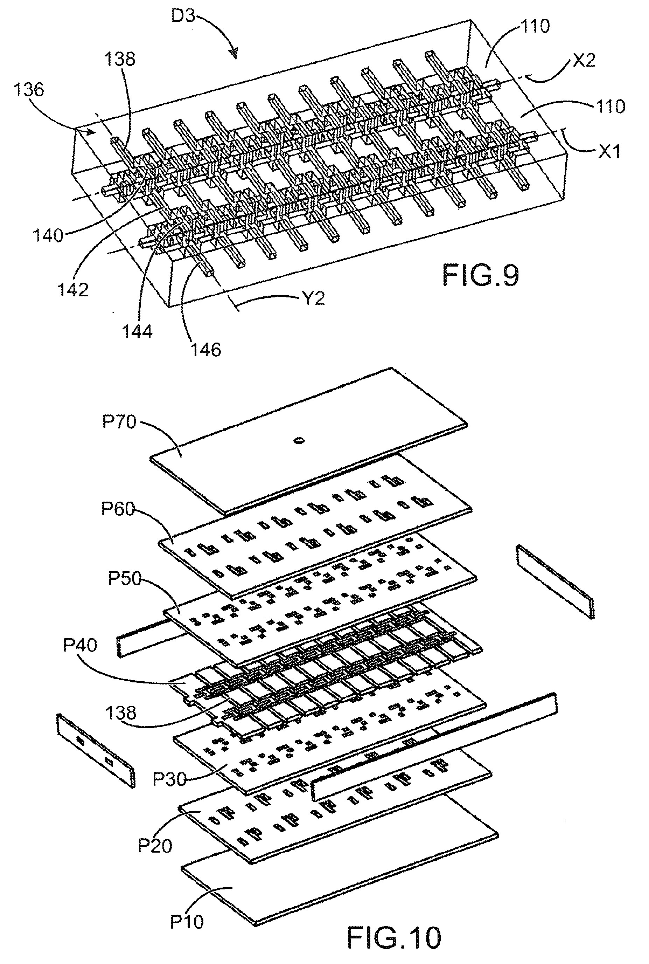

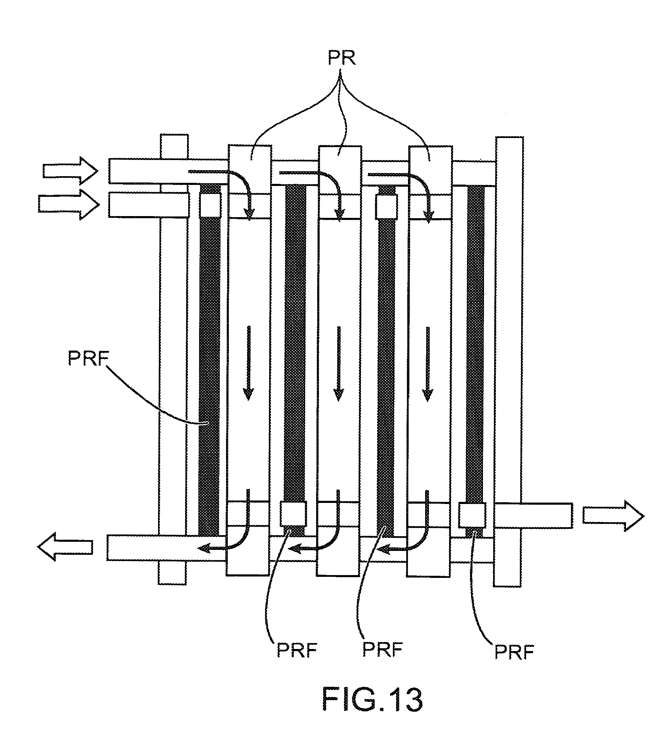

Les procédés mis en oeuvre jusqu'à présent imposent des épaisseurs importantes, ce qui empêche d'avoir un écoulement de caloporteur proche de l'écoulement dans le circuit du mélange. De plus, la seule possibilité dans les dispositifs actuels pour apporter ou retirer de la chaleur est de faire circuler un caloporteur autour du dispositif, plus particulièrement autour des écoulements, comme cela est représenté sur la figure 13 représentant un dispositif avec une alternance de plaques PR dans lesquelles a lieu une réaction et de plaques de refroidissement PRF dans lesquelles s'écoule un caloporteur. Le refroidissement n'est donc pas optimal. Le document « Heat exchanger/reactors (HEX reactors) : Concepts, technologies : state-of-the-art » dans « Chemical Engineering and Processing Process Intensification » 47(2008) 2029-2050 décrit, à la figure 9, un réacteur comportant un canal central dans lequel a lieu la réaction et deux canaux latéraux dans lesquels s'écoule le liquide de refroidissement. Le document EP 1 767 886 décrit un dispositif comportant un échangeur thermique situé entre deux circuits de mélange.

Par ailleurs, ces structures sont difficilement réalisables industriellement. Par exemple, la réalisation par fonderie, i.e. par moulage et noyautage, ne peut pas s'appliquer à des pièces trop complexes, telles que c'est le cas ici. Le moulage par injection n'est économiquement pas adapté à des pièces de grande taille. La réalisation du type prototypage rapide, avec une étape de frittage et fusion laser de poudre ne permet pas d'obtenir des pièces offrant des caractéristiques mécaniques isotropes, et les pièces obtenues sont de taille limitée.

### EXPOSÉ DE L'INVENTION

C'est par conséquent un but de la présente invention d'offrir un dispositif apte à permettre un mélange intime entre au moins deux réactifs chimiques de sorte, par exemple, qu'ils réagissent l'un avec l'autre tout en assurant un échange thermique efficace avec l'extérieur.

C'est également un but de la présente invention d'offrir un procédé de réalisation simple d'une telle structure utilisable à l'échelle industrielle.

Le dispositif selon la présente invention comporte un premier circuit destiné à former un réacteur chimique, appelé « circuit de mélange » dans lequel circulent au moins deux substances chimiques destinées à réagir l'une avec l'autre, ledit premier circuit formant au moins une structure tridimensionnelle comportant des coudes et des bifurcations imposant au fluide des changements de direction, et un deuxième circuit appelé « circuit d'échange thermique » disposé au plus près du circuit de mélange.

En d'autres termes, on imbrique au moins une structure d'échange thermique avec une structure de mélange, la structure de mélange provoquant dans l'écoulement du fluide une succession de phases de séparations et de replis.

Dans un exemple de réalisation, le circuit de mélange comporte au moins un canal définissant un écoulement dans une première direction, le circuit d'échange thermique définissant alors un écoulement dans une direction transversale.

Dans un autre exemple de réalisation, le circuit de mélange et le circuit d'échange thermique définissent des écoulements orientés sensiblement dans la même direction, les deux circuits étant imbriqués.

De manière avantageuse, chaque circuit comporte plusieurs canaux dont les directions sont sensiblement parallèles.

Le procédé de réalisation prévoit de mettre en oeuvre une étape de soudage-diffusion, préférentiellement par compression isostatique à chaud. Pour cela, on prévoit une réalisation du dispositif sous forme de plaques superposées, les plaques comportant des découpes définissant des portions de l'un ou des deux circuits.

Selon un premier exemple de réalisation, le dispositif de mélange d'au moins deux fluides comporte un circuit de mélange desdits fluides et un circuit d'échange thermique dans lequel est destiné à circuler un caloporteur,
- ledit circuit de mélange comportant une,pluralité de réseaux de canaux disposés les uns à côtés des autres, les canaux de chaque réseau étant interconnectés définissant une direction moyenne d'écoulement entre une première extrémité longitudinale et une deuxième extrémité longitudinale, les directions moyennes d'écoulement des la pluralité de réseau de canaux étant parallèles, chaque réseau comportant des portions communes d'écoulement sensiblement parallèles à la direction moyenne d'écoulement, des portions de séparation divisant en deux l'écoulement, les portions de séparation étant raccordées à une portion commune d'écoulement amont et une portion commune d'écoulement aval, chaque portion de séparation imposant au moins trois changements de direction d'écoulement,
- ledit circuit d'échange thermique comportant une pluralité de canaux distincts disposés les uns à côté des autres, lesdits canaux étant disposés au sein du circuit de mélange et s'étendant d'une première extrémité transversale à une deuxième extrémité transversale de sorte que la direction moyenne d'écoulement transversale dans le circuit d'échange soit sensiblement perpendiculaire à la direction moyenne d'écoulement dans le circuit de mélange,
chacun desdits canaux étant situé entre deux portions de séparation successives des réseaux de canaux du circuit de mélange,
- la direction moyenne d'écoulement longitudinale et la direction moyenne d'écoulement transversale définissant un plan moyen d'écoulement,
- au moins un changement de direction d'écoulement s'effectuant dans un plan distinct du plan moyen d'écoulement,
- ledit au moins un réseau de canaux interconnectés du circuit de mélange étant délimité par un premier et un deuxième plan d'extrémité parallèles au plan moyen d'écoulement,
- ledit circuit d'échange thermique étant situé entre lesdits premier et deuxième plans d'extrémité.

Par exemple, les changements de direction sont à angle droit les uns par rapport aux autres. Avantageusement, les portions de séparation sont le siège de pertes de charge sensiblement identiques.

Par exemple, le réseau du circuit d'échange thermique comporte des parties communes et des portions de séparation se raccordant à des portions communes amont et aval, les portions de séparation s'étendant de part et d'autre des parties communes du réseau du circuit de mélange. Le circuit d'échange thermique peut comporter deux canaux parallèles distincts situés de part et d'autre du plan moyen d'écoulement.

Selon un deuxième exemple de réalisation, le dispositif de mélange d'au moins deux fluides comporte un circuit de mélange desdits fluides et un circuit d'échange thermique,
- ledit circuit de mélange comportant une pluralité de réseaux de canaux disposés les uns à côtés des autres, les canaux de chaque réseau étant interconnectés, chaque réseau définissant une direction moyenne d'écoulement entre une première extrémité longitudinale et une deuxième extrémité longitudinale, ledit réseau comportant des portions communes d'écoulement sensiblement parallèles à la direction moyenne d'écoulement, des portions de séparation divisant en deux l'écoulement, les portions de séparation étant raccordées à une portion commune d'écoulement amont et une portion commune d'écoulement aval, chaque portion de séparation imposant au moins trois changements de direction d'écoulement, les directions moyennes d'écoulement de la pluralité de réseaux étant parallèles,
- ledit circuit d'échange thermique comportant une pluralité de canaux distincts, lesdits canaux étant disposés au sein du circuit de mélange et s'étendant d'une première extrémité longitudinale à une deuxième extrémité longitudinale de sorte que l'écoulement moyen dans le circuit d'échange soit sensiblement parallèle à l'écoulement moyen dans le circuit mélange, chacun desdits canaux étant situé à l'intérieur d'un espace délimité par les canaux formant les portions de séparation d'un réseau de canaux.
- la direction moyenne d'écoulement longitudinale et une direction d'écoulement transversale définissant un plan moyen d'écoulement,
- au moins un changement de direction d'écoulement s'effectuant dans un plan distinct du plan moyen d'écoulement,
- ledit au moins un réseau de canaux interconnectés du circuit de mélange étant délimité par une première paire de plans d'extrémité parallèles entre eux et parallèles au plan moyen d'écoulement, et une deuxième paire de plans d'extrémité parallèles entre eux, la droite d'intersection avec l'un au moins des plans de la première et l'un au moins un plan de la deuxième paire de plans étant parallèle à la direction moyenne d'écoulement,
- ledit au moins un canal du circuit d'échange thermique étant situé entre lesdits première et deuxième paires de plans d'extrémité.

De préférence, le sens d'écoulement d'un fluide caloporteur dans le circuit d'échange thermique est opposé au sens d'écoulement dans le circuit de mélange sur au moins une partie du circuit d'échange thermique.

Par exemple, les réseaux du circuit de mélange sont connectés de sorte que les fluides à mélanger circulent au moins dans un premier sens d'écoulement et dans un deuxième sens d'écoulement.

De manière particulièrement avantageuse, le dispositif comporte une pluralité de plaques métalliques superposées, comportant chacune une portion du circuit de mélange et/ou du circuit d'échange thermique. lesdites plaques étant solidarisées par soudage-diffusion. Les plaques sont, de manière encore plus avantageuse, solidarisées par compression isostatique à chaud.

Dans un exemple de réalisation, le circuit d'échange thermique est formé par l'interposition de tuyaux métalliques entre les plaques.

Dans un autre exemple de réalisation, le circuit d'échange thermique est formé par des paires de rainures réalisées dans des faces des plaques superposées se faisant face.

Selon le premier mode de réalisation, le dispositif peut comporter des parois latérales et des parois d'extrémité longitudinale entourant l'empilement de plaques, les plaques d'extrémité longitudinale comportant des perçages de raccordement du circuit de mélange à un système d'alimentation en fluide à mélanger et du circuit d'échange thermique à un système de circulation d'un fluide caloporteur.

Selon le deuxième mode de réalisation, le dispositif peut comporter des parois latérales et des parois d'extrémité longitudinale entourant l'empilement de plaques, les plaques d'extrémité longitudinale comportant des perçages de raccordement du circuit de mélange à un système d'alimentation en fluides à mélanger et les plaques latérales comportant des perçages de raccordement du circuit d'échange thermique à un système de circulation d'un fluide caloporteur.

Au moins une des plaques de l'empilement comporte avantageusement au niveau d'au moins une face d'extrémité longitudinale une saillie longitudinale par réseau du circuit de mélange, ladite saillie étant alignée avec l'axe moyen dudit réseau associé, et dans lequel la plaque d'extrémité longitudinale recouvrant cette face comporte des découpes pour recevoir chaque saillie longitudinale.

Le dispositif est réalisé de préférence en acier inoxydable. Les tuyaux métalliques définissant le circuit d'échange thermique sont également avantageusement en acier inoxydable.

La présente invention a également pour objet un procédé de réalisation d'un dispositif de mélange selon la présente invention, comportant les étapes :
a) de découpe d'une pluralité de plaques métalliques de forme sensiblement parallélépipédique,
b) de découpe de motifs dans au moins une partie des plaques,
c) d'empilement des plaques de telle sorte que les motifs définissent les circuits de mélange et d'échange thermique,
d) de solidarisation desdites plaques par soudage-diffusion,
e) de découpe des faces longitudinales pour découvrir les extrémités des réseaux du circuit de mélange et permettre leurs connexions à un système d'alimentation.

Lors de l'étape c), on peut interposer des tuyaux métalliques entre les plaques pour former le circuit d'échange thermique.

L'empilement de plaques réalisé à l'étape c) peut comporter des plaques métalliques pleines inférieure et supérieure, ledit procédé pouvant comporter une étape c') de mise en place de plaques latérales et de plaques d'extrémité longitudinale de sorte à former un conteneur étanche avec les plaques pleines supérieure et inférieure, et l'étape c") de dégazage de l'intérieur dudit conteneur.

### BRÈVE DESCRIPTION DES DESSINS

La présente invention sera mieux comprise à l'aide de la description qui va suivre et des dessins en annexes, sur lesquels :
- la figure 1 est une vue en perspective en transparence d'un premier exemple de réalisation d'un dispositif de mélange,
- la figure 2 est une vue partielle en perspective agrandie en transparence du dispositif de la figure 1 vu au niveau d'extrémités d'écoulement du circuit de mélange,
- la figure 3 est une vue en perspective agrandie en transparence du dispositif de la figure 1 vu au niveau d'extrémités du circuit d'échange thermique,
- la figure 4 est une vue en plan de côté du dispositif de la figure 1 au niveau d'extrémités du circuit d'échange thermique,
- la figure 5A est une vue éclatée du dispositif de la figure 1 avant son assemblage par compression isostatique à chaud,
- la figure 5B est une vue de détail d'une plaque du dispositif de la figure 5A,
- la figure 6A est une vue en perspective du dispositif de la figure 5A assemblé,
- la figure 6B est une vue de détail de la figure 6A,
- la figure 7 est une vue éclatée d'un deuxième exemple de réalisation d'un dispositif avant son assemblage par compression isostatique à chaud,
- la figure 8 est une vue de détail d'une extrémité du dispositif selon le premier mode de réalisation au niveau d'extrémités du circuit de mélange,
- la figure 9 est une vue en perspective en transparence d'un troisième exemple de réalisation d'un dispositif,
- la figure 10 est une vue éclatée du dispositif de la figure 9 avant son assemblage par compression isostatique à chaud,
- la figure 11A est une vue en perspective en transparence d'un quatrième exemple de réalisation d'un dispositif de mélange,
- la figure 11B est une vue éclatée du dispositif de la figure 11A avant son assemblage par compression isostatique à chaud,
- la figure 11C est une vue en perspective d'un canal de mélange seul selon un autre exemple de réalisation,
- la figure 12A est une vue en perspective en transparence d'un cinquième exemple de réalisation d'un dispositif de mélange,
- la figure 12B est une vue éclatée du dispositif de la figure 12A avant son assemblage par compression isostatique à chaud,
- la figure 13 est une vue de face schématique d'un réacteur chimique muni d'un circuit d'échange thermique de l'état de la technique.

### EXPOSÉ DÉTAILLÉ DE MODES DE RÉALISATION PARTICULIERS

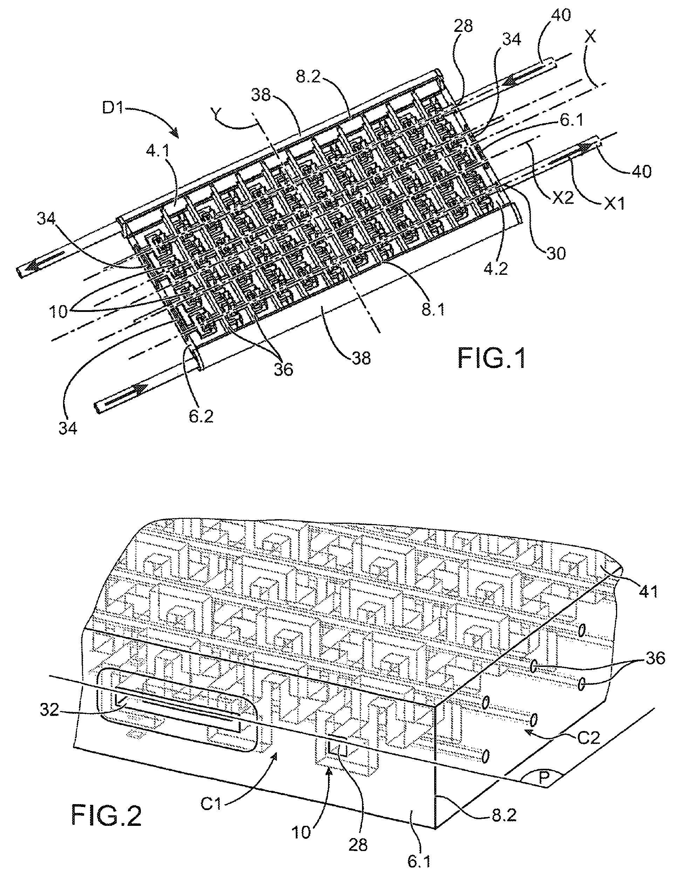

Sur les figures 1 et 2, on peut voir un premier exemple d'un dispositif D1 destiné à former un réacteur chimique. Dans la suite de la description, le réacteur chimique sera désigné par dispositif.

Le dispositif D1 comporte un corps 2 de forme sensiblement parallélépipédique muni d'une face supérieure 4.1 et d'une face inférieure 4.2 de plus grande surface et de deux faces d'extrémités longitudinales 6.1, 6.2 et deux faces d'extrémités latérales 8.1, 8.2.

Le dispositif D1 comporte un premier circuit C1 destiné à former le réacteur chimique et sera désigné par la suite « circuit de mélange » et deuxième circuit C2 d'échange thermique.

Dans l'exemple représenté, le circuit de mélange C1 comporte plusieurs canaux de mélange 10 distincts. Un dispositif dans lequel le premier circuit ne comporterait qu'un seul canal ne sort pas du cadre de la présente invention. Cependant, dans le cadre d'une utilisation industrielle, il est avantageux d'avoir plusieurs canaux dans lesquels ont lieu les réactions chimiques, ce qui permet d'augmenter le temps de mise en contact des réactifs chimiques avec un encombrement limité.

Les canaux de mélange 10 s'étendent entre une première face longitudinale 6.1 et une deuxième face d'extrémité longitudinale 6.2 du corps et dans lesquelles ils débouchent. Chaque canal de mélange définit un écoulement s'étendant selon une direction X1, X2,...Xn parallèles à l'axe longitudinal X.

Dans l'exemple représenté, les canaux de mélange sont sensiblement identiques, un seul d'entre eux sera donc décrit en détail.

Nous considérerons un plan P comprenant les axes d'écoulement X1, X2,...Xn. Le plan P est désigné plan moyen d'écoulement.

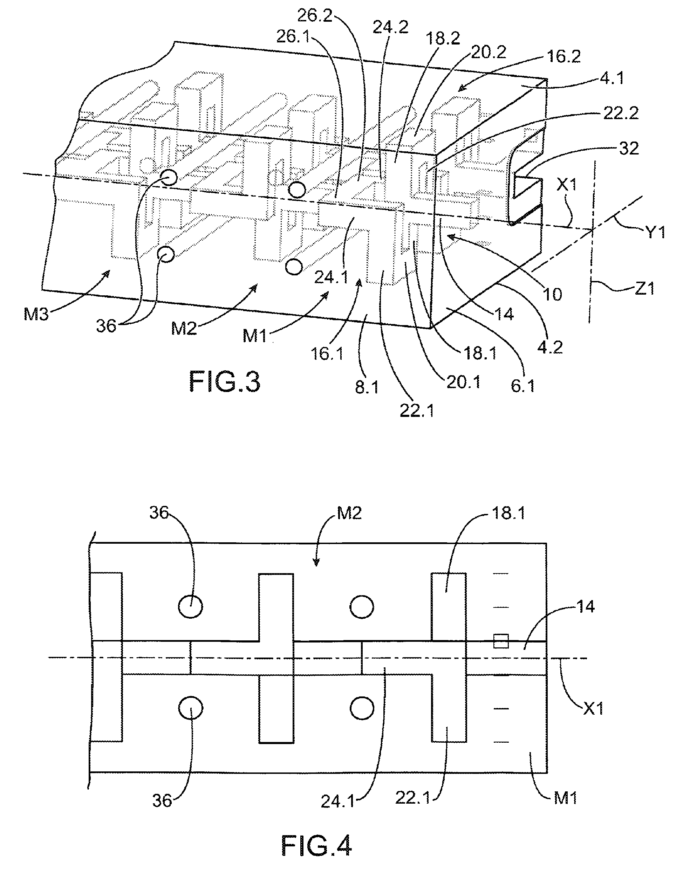

Sur les figures 2 et 3, on peut voir en détail les canaux de mélange 10.

Le canal de mélange 10 comporte une succession de motifs identiques M1, M2,...Mn connectés de manière fluidique en série. Cette série de motifs M1, M2,...Mn est particulièrement visible sur la figure 3.

Dans l'exemple représenté, le motif M1 et donc, de fait, le canal de mélange formé d'une succession de motifs, présentent une symétrie axiale par rapport à l'axe X1.

On définit un repère X1Y1Z1, les axes X1Y1Z1 étant perpendiculaires entre eux.

Un motif M1 comporte un premier conduit commun 14 d'axe X1 dans lequel s'écoule tout le fluide, suivi de deux deuxièmes conduits 16.1, 16.2 divisant le débit de fluide en deux, désignés conduits de séparation..

Chaque deuxième conduit de séparation 16.1, 16.2 comporte cinq portions de conduit, imposant au fluide des changements de direction.

Dans l'exemple représenté, le deuxième conduit de séparation 16.1 comporte un première portion 18.1 d'axe parallèle à Z1 perpendiculaire au plan P et s'étendant vers la face inférieure 4.2, une deuxième portion 20.1 d'axe parallèle à Y1 perpendiculaire à l'axe X1 et à l'axe Z1 s'étendant vers la face latérale 8.1, une troisième portion 22.1 d'axe parallèle à l'axe Z1 s'étendant vers la face supérieure 4.1, une quatrième portion 24.1 d'axe parallèle à l'axe X1, contenu dans le plan P et s'étendant vers la face d'extrémité 6.2 et une cinquième portion 26.1 d'axe parallèle à l'axe Y1 et s'étendant vers la face latérale 8.2.

Dans l'exemple représenté également, le deuxième conduit de séparation 16.2 comporte un première portion 18.2 d'axe Z1 perpendiculaire au plan P et s'étendant vers la face supérieure 4.1, une deuxième portion 20.2 d'axe parallèle à Y1 s'étendant vers la face latérale 8.2, une troisième portion 22.2 d'axe parallèle à l'axe Z1 s'étendant vers le face inférieure 4.2, une quatrième portion 24.2 d'axe parallèle à l'axe X1, contenu dans le plan P et s'étendant vers la face d'extrémité 6.2 de Z1 et une cinquième portion 26.2 d'axe parallèle à l'axe Y1 et s'étendant vers la face latérale 8.1.

Les deux cinquièmes portions 26.1, 26.2 se raccordent au niveau de l'axe X1 pour se raccorder à une première portion 14 du motif suivant.

Vu le long de l'axe X1, les canaux de mélange sont reçus entre deux plans d'extrémité situés de part et d'autre du plan moyen d'écoulement et parallèles à celui-ci. Dans l'exemple représenté, les plans d'extrémité contiennent les parois extérieures des deuxièmes portions 20.1, 20.2.

Dans chaque motif, le fluide est divisé en deux flux, qui sont ensuite rassemblés.

Les deux deuxièmes conduits de séparation sont tels qu'ils provoquent des pertes de charge sensiblement identiques. Dans l'exemple représenté, ils ont une structure symétrique.

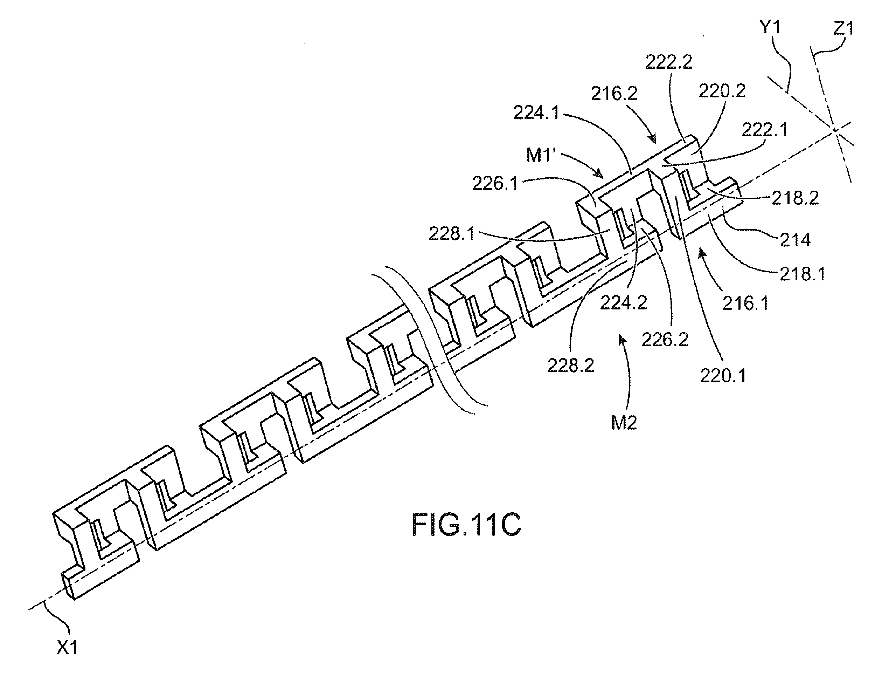

Chaque conduit de séparation, dans l'exemple représenté, imposent chacun six changements de direction au fluide. Les conduits de séparation imposent au moins trois changements de direction au fluide, comme c'est le cas dans la structure représenté sur la figure 11C qui sera décrite par la suite.

Dans l'exemple représenté, les canaux de mélange sont connectés en série de sorte que le fluide effectue des allers et retours dans le dispositif. Le premier circuit a alors la forme d'un serpentin connecté à un système extérieur d'alimentation et de collecte par une première extrémité 28 et une deuxième extrémité 30 visibles sur la figure 1. Les première 28 et deuxième 30 extrémités du premier circuit C1 correspondent aux canaux situés au plus près des faces latérales du corps.

Les canaux intermédiaires sont donc connectés via leurs extrémités longitudinales par des canaux de liaison transversaux 32 situés dans les faces longitudinales 6.1, 6.2 entre les extrémités de deux canaux successifs. Ces rainures sont obturées par des plaquettes 34. Le fluide, en empruntant ces rainures 32, passe d'un canal à un canal adjacent, change de direction et circule dans le sens opposé. Dans l'exemple représenté, les canaux sont formés par une tranchée reliant deux canaux adjacents et une plaquette 34 obturant de manière étanche la tranchée. Avantageusement une rainure est prévue sur le contour de la tranchée pour assurer le positionnement de la plaquette, qui est par exemple fixée par soudage.

Les canaux de liaisons transversaux 32 formés entre la tranchée et la plaquette 34 ont une section de passage sensiblement identique à celle des canaux de mélange longitudinaux qu'ils relient.

Au niveau des plaquettes de fermeture 34, il est avantageusement possible d'implanter un ou plusieurs instruments de mesure, afin par exemple de récolter des données concernant la température, la pression et/ou le pH. Il est également possible, par le biais de ces plaquettes de fermeture 34, d'assurer une introduction additionnelle de réactifs, et/ou d'effectuer un nettoyage des canaux en cas d'encrassement ou de solidification. Enfin, il est également possible, toujours par le biais de ces plaquettes de fermeture 34, d'ajouter des mélangeurs statiques ou tout autre insert requis, en particulier des inserts revêtus de catalyseurs.

Le circuit C2 d'échange thermique comporte des canaux transversaux 36 d'axes parallèles à l'axe Y, débouchant dans les faces latérales du corps.

Les canaux d'échange thermique 36 sont situés au sein de la structure des canaux de mélange. Les canaux d'échange thermique 36 sont situés entre le plan moyen d'écoulement P et un plan d'extrémité délimitant l'extrémité supérieure ou inférieure des canaux de mélange.

Dans l'exemple représenté, le circuit d'échange thermique C2 comporte des canaux 36 répartis dans deux plans parallèles au plan P, de part et d'autre de celui-ci. En outre, des paires de canaux 36 sont disposées entre deux motifs successifs du canal de mélange 10.

Dans l'exemple représenté, les paires de canaux 36 sont situés dans un même plan perpendiculaire au plan P.

Cette répartition des canaux d'échange thermique est avantageuse car elle permet d'avoir une grande densité de canaux situés au plus près du circuit de mélange et donc d'assurer une extraction ou un apport de chaleur optimal(e).

On peut prévoir moins ou plus de canaux d'échange thermique 36. Par exemple, on pourrait envisager de n'avoir qu'un seul canal 36 entre deux motifs en alternant les canaux situés au dessus et en dessous du plan P.

Dans l'exemple représenté et de manière avantageuse, les canaux 36 d'échange thermique sont connectés en parallèle et des connecteurs d'alimentation et de collecte 38 du caloporteur, que l'on peut voir sur la figure 1, fixés sur les faces latérales du corps. Cette connexion en parallèle permet d'obtenir une très bonne homogénéisation de la température dans l'ensemble du dispositif.

On pourrait cependant prévoir, comme pour les canaux de mélange de les connecter en série et de n'avoir qu'une seule entrée et une seule sortie de caloporteur.

Sur la figure 1, on peut également voir des connecteurs 40 pour relier le circuit de mélange C1 à un système d'alimentation et de collecte.

Le nombre de canaux de mélange 10 est choisi en fonction du temps de séjour souhaité du fluide dans le dispositif. Le nombre de canaux 36 d'échange thermique est choisi, quant à lui, en fonction de la quantité de chaleur souhaitée à apporter ou à retirer.

Dans l'exemple représenté, les canaux des circuits C1 et C2 ont une section carrée, ce qui simplifie la fabrication. Cependant des circuits C1 et C2 formés de canaux à section rectangulaire, elliptique ou circulaire ne sort pas du cadre de la présente invention. On peut également prévoir de réaliser des canaux à section carrée ou rectangulaire et de supprimer les angles vifs en faisant circuler ensuite une pâte abrasive ou alors un acide, tel que l'acide fluorhydrique dans les canaux.

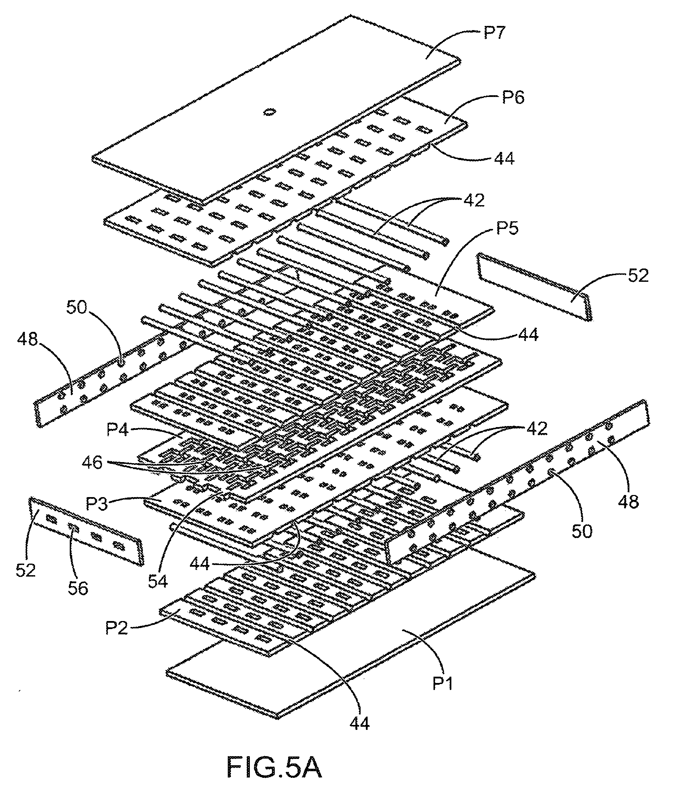

Sur la figure 5A, on peut voir une vue éclatée d'un exemple de fabrication du dispositif D1.

De manière générale, le dispositif D1 est fabriqué à partir d'un empilement de plaques préalablement structurées de sorte qu'elles comportent des portions des circuits de mélange et d'échange thermique.

Plus particulièrement, dans l'exemple représenté l'assemblage constituant le dispositif D1 comporte une plaque d'extrémité inférieure pleine P1, cinq plaque intermédiaires P2 à P6 structurées et délimitant les circuits C1 et C2, et une plaque d'extrémité supérieure pleine P7 munie d'un orifice.

Dans cette exemple de réalisation, les canaux 36 d'échange thermique sont formés à partir de tubes 42 insérés entre les plaques P2 et P3 et entre les plaques P5 et P6, lesdits tubes 42 étant reçus dans des rainures transversales 44 pratiquées dans les plaques P2, P3 et P5, P6. Les rainures 44 se font face deux à deux, délimitant ainsi des logements transversaux pour les tubes 42. La mise en oeuvre de tubes 42 pour assurer l'écoulement du fluide caloporteur permet d'obtenir un dispositif résistant à la pression. En effet, la pression de caloporteur peut être de l'ordre de 10 bars, cette pression s'applique sur la paroi des tubes et non directement sur les plaques P5 et P6 et P2 et P3.

Comme on peut le voir, les plaques P2 et P6 présentent des découpes identiques, ainsi que les plaques P3 et P5. Cependant, l'emplacement de ces découpes n'est pas nécessairement le même. En effet, les canaux de mélange de la structure présentant une symétrie axiale par rapport à l'axe X1, les découpes dans les plaques P5, P6 sont décalées selon l'axe Y.

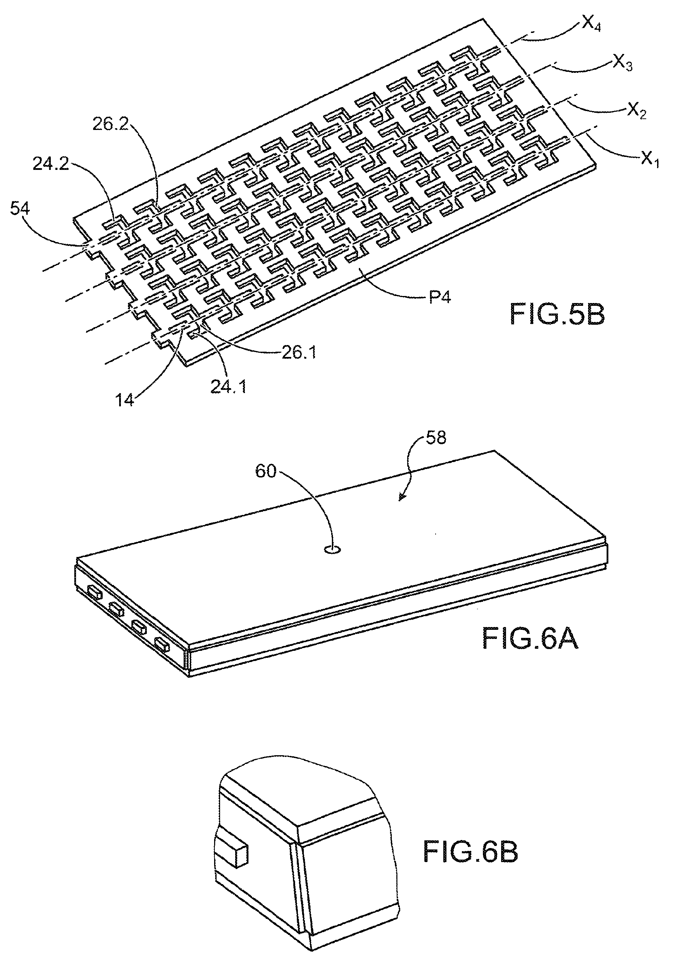

La plaque centrale P4 est plus particulièrement visible sur la figure 5B, cette plaque est celle comportant le plan moyen d'écoulement P et est munie de découpes 46 définissant le premier conduit 14 et les quatrièmes et cinquièmes portions 24.1, 24.2, 26.1, 26.2.

Avantageusement, les découpes dans les plaques sont réalisées au moyen d'un dispositif laser. Les rainures recevant les tubes peuvent être réalisées par fraisage.

En outre, l'assemblage comporte des plaques latérales 48 munies de perçages 50 destinés à recevoir les extrémités des tubes 42, et des plaques d'extrémité longitudinale 52 destinées à être percées pour permettre la connexion au premier circuit.

De manière avantageuse, la plaque centrale P4 comporte à une extrémité longitudinale des saillies 54 axiales alignées avec les axes X1, X2,...Xn, et la plaque d'extrémité longitudinale 52 comporte des découpes 56 pour le passage des saillies axiales 54. Les saillies 54 permettent de repérer l'emplacement des extrémités de canaux de mélange 10 pour effectuer le perçage des plaques longitudinales afin de réaliser les canaux de liaison transversaux.

Le procédé de réalisation comporte les étapes :
- de réalisation du dispositif sous forme d'éléments à assembler tels que décrits ci-dessus, et
- d'assemblage par soudage-diffusion.

Le procédé d'assemblage par soudage-diffusion consiste à appliquer une haute température et une haute pression à un assemblage de pièces provoquant une diffusion d'atomes entre les pièces.

De manière préférentielle, l'assemblage par soudage diffusion est un assemblage par compression, isostatique à chaud des éléments du dispositif, désignée par la suite CIC.

Le principe de la CIC est d'appliquer à un assemblage de pièces métalliques, céramique ou cermet, une pression de gaz élevée, le gaz étant par exemple de l'argon, à une température élevée pendant un temps donné. La pression et la température ont pour effet d'éliminer les jeux entre les pièces et de provoquer un soudage par diffusion d'atomes à l'état solide de celles-ci, appelé soudage diffusion. On obtient alors un composant monolithique.

Afin d'appliquer la pression de gaz sur les faces extérieures de l'assemblage, les plaques extérieures de l'assemblage forme un conteneur fermé de manière étanche auquel est appliquée la pression de gaz, qui la transmet aux éléments intérieurs.

Sur la figure 6A, on peut voir le conteneur 58 fermé.

En se référant à la figure 5A, le conteneur 58 est formé de la plaque inférieure P1, de la plaque supérieure P7, des plaques latérales 48 et des plaques d'extrémité 52.

La plaque supérieure P7 comporte un orifice 60 pour permettre le dégazage de son volume intérieur, plus particulièrement le retrait du gaz prisonnier au niveau des interfaces entre les différentes pièces de l'assemblage, et qui pourrait gêner le soudage diffusion des différentes pièces de l'assemblage. Par exemple, un queusot (non représenté) est fixé dans l'orifice 60 pour effectuer le dégazage. Le queusot est ensuite obturé avant l'étape de CIC.

Avantageusement, on choisit pour le conteneur des plaques supérieure et inférieure ayant une épaisseur suffisante pour éviter un effondrement du conteneur au niveau des canaux lors du premier cycle de CIC.

Sur la figure 6B, on peut voir un détail avantageux de conteneur de la figure 6A. Les plaques latérales 48 et les plaques d'extrémité longitudinale 52 du conteneur sont dimensionnées de telles sorte que leurs extrémités se chevauchent « quart-quart », ce qui permet d'améliorer la qualité de la soudure et donc de réaliser une bonne étanchéité. Le soudage entre les différents éléments du conteneur est par exemple un soudage TIG.

De manière avantageuse, la CIC se déroule selon deux cycles :
- un premier cycle dit basse pression, par exemple à une pression comprise entre 50 à 150 bars et à une température comprise entre 1000°C et 1100°C pendant 2h,
- un deuxième cycle après ouverture des canaux par perçage, dit haute pression, par exemple à une pression comprise entre 1000 à 1500 bars et à une température comprise entre 1000 et 1100°C pendant 2h. L'ouverture des canaux est obtenue par la réalisation de perçages dans les saillies 54. Ensuite ; pour appliquer la pression à l'intérieur du conteneur, on introduit le gaz sous pression dans le conteneur via ces perçages ; on applique également la pression via le gaz sur les faces extérieures du conteneur. L'application d'une pression à l'intérieur et à l'extérieur du conteneur a pour effet de plaquer les différents éléments les uns contre les autres, et de provoquer la diffusion des atomes entre les pièces.

Le procédé de fabrication du dispositif de la figure 5A comporte les étapes :
- de réalisation des pièces qui, une fois assemblées, formeront le dispositif, lesdites pièces sont par exemple découpé au moyen d'un dispositif laser,
- d'insertion des tubes entre les plaques au niveau des rainures,
- de soudage des éléments du conteneur entre eux et des tubes dans les perçages 50 des plaques latérales 48 du conteneur de sorte à définir un système étanche,
- de dégazage de l'intérieur du conteneur et d'obturation du queusot,
- de solidarisation par CIC des pièces et des tubes,
- d'usinage pour permettre les connexions du circuit de mélange et d'échange thermique.

A la fin de l'étape de CIC, le conteneur 58 peut soit être retiré par usinage, soit être conservé entièrement ou partiellement. Dans ce dernier cas, les parois du conteneur sont percées ou usinées pour découvrir les canaux d'échange thermique et les canaux de mélange.

Suite à l'étape de CIC, on effectue un usinage qui se déroule en deux temps

Dans un premier temps, il s'agit d'une opération de «dégainage», par surfaçage, afin d'apporter au dispositif les dimensions finales souhaitées, de déboucher les canaux de mélange en entrée et sortie et d'assurer, si nécessaire la planéité et le parallélisme des surfaces supérieure et inférieure.

Dans un deuxième temps, on réalise les tranchées destinées à relier les canaux de mélange adjacents. Ces tranchées sont ensuite obturées de manière étanche par des plaquettes telles que déjà décrites, celles-ci étant fixées par soudage. La section de passage de ces canaux de liaison transversaux est sensiblement égale à la section des canaux de mélange. Comme déjà décrit précédemment, on réalise avantageusement une rainure autour de l'ouverture des évidements pour la mise et place des plaquettes et leur centrage.

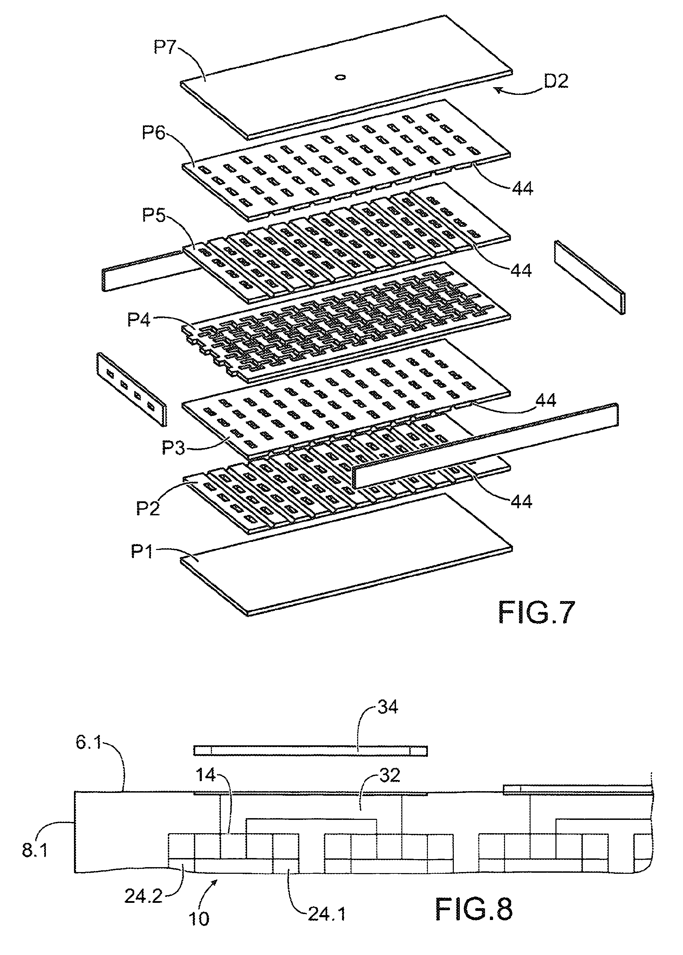

Sur la figure 7, on peut voir une vue éclatée d'un autre exemple de réalisation d'un assemblage destiné à la réalisation du dispositif D1 de la figure 1. Cet assemblage diffère de celui de la figure 5A en ce que les canaux d'échange thermique sont formés directement par les parois des rainures 44 pratiquées dans les faces des plaques P2, P3 et P5, P6. Cet assemblage est de réalisation plus simple et de coût de revient réduit.

A titre d'exemple non limitatif, nous allons décrire un exemple pratique de réalisation d'un dispositif de mélange représenté sur la figure 5A.

Le dispositif peut présenter les dimensions extérieures suivantes : une largeur de 87 mm, une longueur de 188 mm et une hauteur de 20,4 mm. Il comporte quatre canaux de mélange 10 et vingt deux canaux d'échange thermique 36 répartis en deux plans. Les canaux de mélange 10 ont tous une section carrée de 3 mm de côté.

On utilise de l'acier inoxydable 316L pour réaliser les différentes pièces de l'assemblage.

L'empilement comporte sept plaques de 3 mm d'épaisseur. Les découpes, dans les plaques définissant les canaux de mélange, sont faites au laser. Les tubes formant les canaux d'échange thermique sont en acier inoxydable 316L, ont un diamètre intérieur de 2 mm et un diamètre extérieur de 4 mm. Les tubes ont une longueur de 91 mm ; ils s'étendent sur toute la largeur des plaques et pénètrent dans les plaques latérales 48.

Les connecteurs latéraux destinés à alimenter les canaux d'échange thermique et à collecter le caloporteur sont des demi-tubes en acier inoxydable 316L, ayant un diamètre intérieur de 14 mm, un diamètre extérieur de 16 mm et de longueur égale à 188 mm.

Les plaques supérieure P7 et inférieure P1 du conteneur ont une épaisseur de 3 mm évitant un effondrement du conteneur au niveau des canaux lors du premier cycle de CIC. En revanche, les plaques latérales 48 peuvent être choisies d'épaisseur plus faible, par exemple 2 mm ce qui permet de limiter le volume total.

La plaque supérieure P7 comporte l'orifice 60 de diamètre 6 mm.

Après usinage des tranchées pour réaliser les canaux de liaison transversaux, on soude des plaquettes en acier 316L pour fermer les tranchées. Celles-ci présentent une épaisseur de 1 mm insérées dans des rainures de profondeur 0.2 mm.

Le procédé de fabrication, en particulier l'étape de soudage diffusion par CIC, permet d'assembler de grandes surfaces complexes, sans métal d'apport, ce qui évite ainsi les problèmes associés à la présence de matériaux à bas point de fusion, comme par exemple la limitation de la température d'utilisation du dispositif, la faible résistance à la corrosion et la pollution des réactifs chimiques par les joints brasés.

De plus, les jonctions obtenues par soudage diffusion sont particulièrement résistantes. On évite la présence de soudures traversant les parois, qui peuvent être sources de fuites.

L'assemblage par CIC permet d'éliminer les porosités éventuelles. On obtient un matériau 100 % denses, i.e. qui ne présente aucune porosité. L'assemblage ainsi obtenu présente de très bonnes propriétés mécaniques. En outre, il est simple à mettre en oeuvre. De plus le produit obtenu à la fin du procédé de CIC est de grande qualité.

Par ailleurs, cette technique peut s'appliquer à de gros composants possibles. Par exemple, il existe des fours de CIC, dont le diamètre est de 1.5 m et la hauteur est de 3 m.

Sur la figure 9, on peut voir un autre exemple de réalisation d'un dispositif de mélange D3 dans lequel les canaux d'échange thermique s'étendent dans plusieurs plans. Dans l'exemple représenté, les canaux d'échange thermique sont également orientés transversalement par rapport à l'écoulement moyen du fluide dans les canaux de mélange.

Le dispositif D3 comporte des canaux de mélange 110 identiques aux canaux 10 déjà décrits dans les exemples précédents. Les canaux 110 s'étendent chacun le long d'un axe longitudinal X1, X2.

Les canaux 136 sont identiques, un seul canal sera décrit en détail.

Le canal 136 s'étend le long d'un axe Y1 orthogonal à l'axe X1 et comporte des portions dans lesquelles tout le fluide caloporteur circule et des portions dans lesquelles le fluide est séparé en deux et circule de part et d'autre des canaux de mélange 110.

Dans l'exemple représenté, le canal 136 comporte une première portion commune 138 destinée à être connectée au circuit extérieur d'échange thermique, une première portion 140 formant bifurcation et s'étendant de part et d'autre du premier canal de mélange, une deuxième portion commune 142, une deuxième portion 144 formant bifurcation et s'étendant de part et d'autre du deuxième canal de mélange et une troisième portion commune 146 et destinée à être connectée au circuit extérieur d'échange thermique.

Les portions communes s'étendent dans le plan moyen d'écoulement P des canaux de mélange.

Dans l'exemple représenté, les canaux d'échange thermique 136 comportent autant de portions de bifurcation que de canaux de mélange.

Les portions de bifurcation sont formées par deux conduits en forme de U disposés en regard et se connectant aux portions communes au niveau des extrémités des branches du U.

Les canaux d'échange thermique 136 sont réalisés de manière similaire aux canaux de mélange, en réalisant des découpes dans les plaques.

Comme dans les exemples précédents, les canaux d'échange thermique 136 croisent les canaux de mélange au niveau de la connexion entre deux motifs.

Cet exemple de réalisation présente l'avantage de disposer les canaux d'échange thermique encore plus près des canaux de mélange, puisque les portions de bifurcation entourent latéralement les canaux, ce qui permet donc d'améliorer la maîtrise thermique des réactions se tenant dans le circuit de mélange. De plus, ces canaux étant réalisés comme les canaux de mélange, le procédé de réalisation est simplifié et les étapes à mettre en oeuvre sont réduites.

On peut prévoir que les canaux d'échange thermique comportent moins de portions de bifurcation que de canaux de mélange, voire qu'ils ne comportent que deux portions communes au niveau des extrémités latérales et deux portion de bifurcation de part et d'autre des canaux de mélange.

Sur la figure 10, on peut voir une vue explosée de l'assemblage mis en oeuvre pour réaliser le dispositif de la figure 9. Celui-ci comporte deux plaques d'extrémité P10 et P70 et cinq plaques intermédiaires P20 à P60 munies de découpes destinées à définir les canaux.

Comme on peut le voir sur la plaque centrale P40, celle-ci comporte les découpes destinées à former à la fois les portions de conduit des canaux de mélange dans le plan P et les portions communes des canaux 136, ces dernière formant des lumières transversales 138 dans la plaque P40.

Dans cet exemple, le dispositif ne comportant que deux canaux de mélange 110, la plaque centrale P40 ne comporte que deux saillies de repérage.

La solidarisation et l'obtention de l'étanchéité de cet assemblage sont obtenues par CIC de manière similaires aux dispositifs décrits précédemment, cette étape ne sera pas décrite à nouveau.

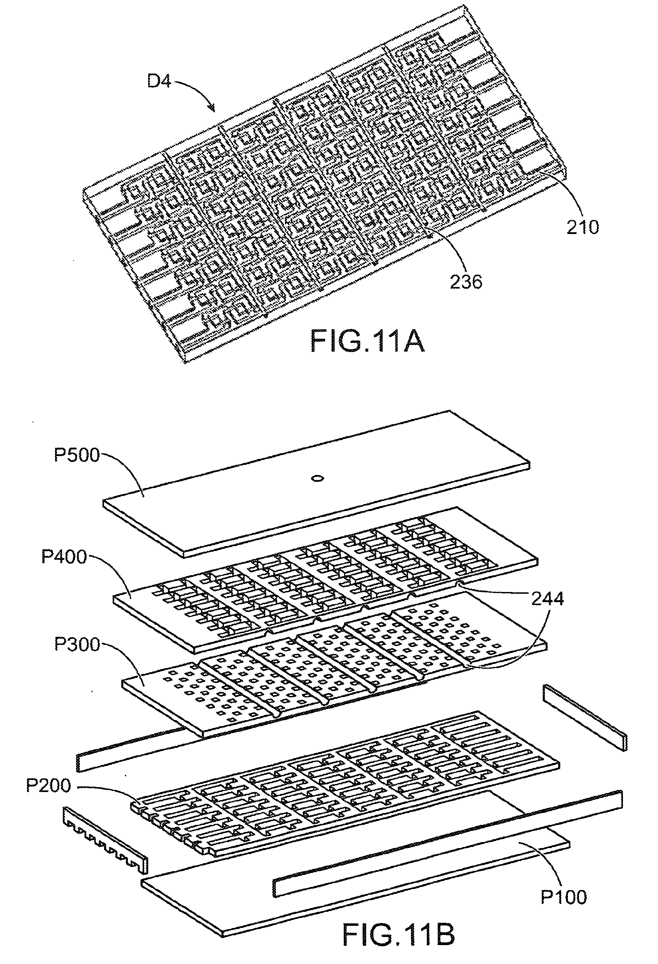

Sur la figure 11A, on peut voir un autre exemple d'un dispositif de mélange D4, dans lequel les canaux de mélange présentent une forme différente.

Le dispositif D4 comporte un corps 202 de forme sensiblement parallélépipédique muni d'une face supérieure 204.1 et d'une face inférieure 204.2 de plus grande surface et de deux faces d'extrémités longitudinales 206.1, 206.2 et deux faces d'extrémités latérales 208.1, 208.2.

Un canal de mélange 210 est représenté seul sur la figure 11C. Celui-ci comporte des conduits d'écoulement commun et des conduits dans lequel le fluide est séparé.

On définit un repère X1Y1Z1.

Le canal de mélange 210 comporte une succession de motifs identiques connectés de manière fluidique en série.

Un motif M1' comporte un premier conduit commun 214 d'axe X1 et deux deuxièmes conduits 216.1, 216.2 divisant le fluide en deux.

L'un des deuxièmes conduits 216.1 comporte une première portion 218.1 d'axe X1, suivie d'une deuxième 220.1 portion d'axe parallèle à Z1 s'étendant vers la face supérieure 204.1 dans la représentation de la figure 11C, une troisième portion 222.1 d'axe parallèle Y1 s'étendant vers la face latérale 208.2, suivie d'une quatrième portion 224.1 d'axe parallèle à X1, une cinquième portion 226.1 d'axe parallèle à Y1 s'étendant vers la face latérale 208.1 et une sixième portion 228.1 d'axe parallèle à Z1 et s'étendant vers la face inférieure 204.2.

L'autre deuxième conduit 216.2 comporte une première portion 218.2 d'axe parallèle à Y1 s'étendant vers la face latérale 208.2, suivie d'une deuxième portion 220.2 d'axe parallèle à Z1 s'étendant vers la face supérieure 204.1, une troisième portion 222.2 d'axe parallèle à X1 s'étendant vers la face d'extrémité longitudinale 206.2, suivie d'une quatrième portion 224.2 d'axe parallèle à Z1 s'étendant vers la face inférieure 204.2, une cinquième portion 226.2 d'axe parallèle à Y1 et s'étendant vers la face latérale 208.1 et une sixième portion 228.2 d'axe X1.

Les troisièmes portions 222.1, 222.2 se raccordent, le fluide est alors rassemblé puis séparé. Les sixièmes portions 228.1, 228.2 se raccordent également pour se connecter au premier conduit commun du motif suivant.

Les deux deuxièmes conduits présentent sensiblement les mêmes pertes de charge.

Les canaux de mélange sont par exemple connectés en série de sorte à ne former qu'un seul circuit.

Les canaux de mélange, selon cet exemple de réalisation, sont contenus dans un parallélépipède à section carrée, ils offrent une compacité augmentée.

L'exemple de la figure 11A est proche de celui de la figure 1, puisque les canaux d'échange thermique 236 sont transversaux. Dans cet exemple, les canaux d'échange thermique 236 sont répartis dans un seul plan et croisent les canaux de mélange 210 entre deux motifs successifs. Le plan des canaux d'échange thermique 236 forme un plan médian pour les canaux de mélange 210. Les canaux d'échange thermique 236 croisent les canaux de mélange 210 au plus près, assurant par conséquent un très bon échange thermique.

Sur la figure 11B, on peut voir une vue éclatée de l'assemblage des éléments mis en en oeuvre pour réaliser le dispositif de la figure 11A.

L'assemblage comporte cinq plaques superposées P100 à P500, deux plaques d'extrémité P100, P500 et trois plaques intermédiaires P200, P300, P400.

Les trois plaques intermédiaires P200, P300, P400 sont munies de découpes définissant une fois les plaques assemblées les circuits de canaux de mélange et d'échange thermique tels que visibles en transparence sur la figure 11A.

La plaque intermédiaire la plus inférieure P200 est celle délimitant les extrémités de connexion au circuit extérieur. La plaque P200 comporte avantageusement des saillies de repérage alignées avec les axes des canaux de mélange 210.

En particulier, les canaux d'échange thermique 236 sont réalisés à partir de rainures 244 transversales pratiquées dans les faces des plaques intermédiaires P300, P400.

On pourrait prévoir, comme dans l'exemple de la figure 1, d'insérer des tubes entre les rainures 244.

L'assemblage comporte également des plaques latérales et des plaques longitudinales, celle disposée du côté des saillies de repérage comporte des évidements permettant le passage des saillies de repérage.

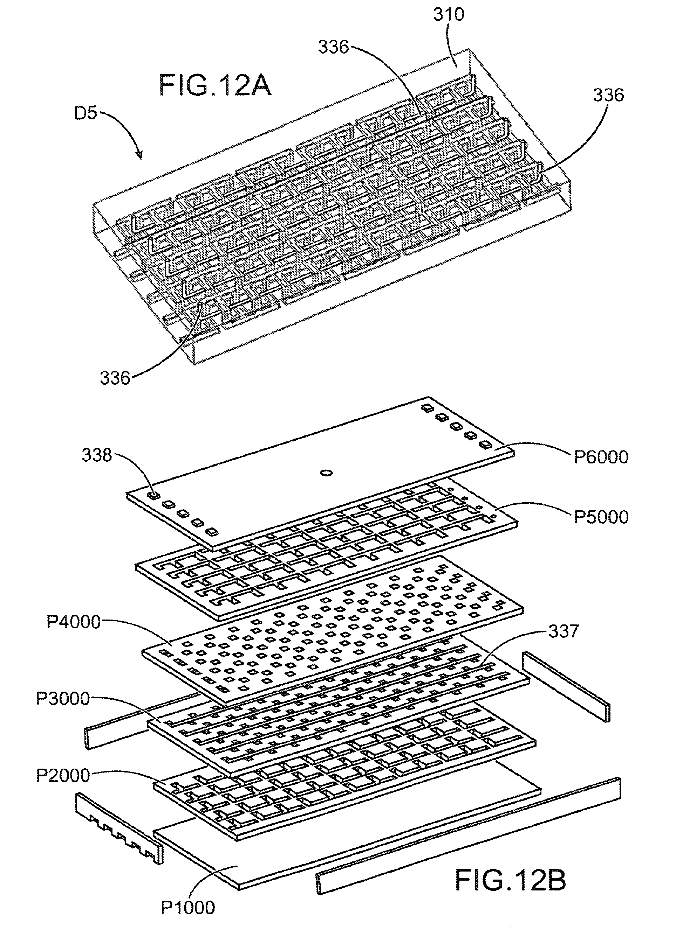

Sur la figure 12B, on peut voir un autre exemple de réalisation d'un dispositif de mélange D5, dans lequel les canaux de mélange 310 sont similaires à ceux de la figure 11C. En revanche, les canaux d'échange thermique 336 s'étendent longitudinalement. Chaque canal d'échange thermique 336 est situé au coeur d'un canal de mélange 310.

Comme on peut le voir sur la figure 11C, le canal de mélange délimite un passage central libre s'étendant d'une première extrémité longitudinale vers une deuxième extrémité longitudinale, dans lequel peut être logé un canal qui soit isolé de manière étanche par rapport aux portions de conduit du canal de mélange.

Cette disposition du canal d'échange thermique 336 au coeur du canal de mélange 310 permet d'améliorer encore les échanges thermiques entre le canal de mélange 310 et le canal d'échange thermique 336.

Dans l'exemple représenté, les connexions des canaux d'échange thermique 336 avec le circuit extérieur sont sous la forme de piquages orthogonaux 338 au plan moyen du dispositif. On peut prévoir une connexion au niveau des faces longitudinales. L'alimentation en caloporteur des canaux 336 s'effectue par exemple en parallèle en disposant des connecteurs transversaux sur la plaque supérieure.

De manière avantageuse, on prévoit de faire circuler le caloporteur dans un sens opposé à celui du fluide dans les canaux annulaires, ce qui améliore les échanges. Dans l'exemple représenté, les canaux de mélange étant connectés en série, le fluide à mélanger effectue des allers-retours alors que le fluide caloporteur à un seul sens d'écoulement. Ainsi, la circulation en sen opposé a lieu tous les deux ensembles canal de mélange -canal d'échange thermique.

Sur la figure 12B, on peut voir une vue éclatée de l'assemblage des éléments mis en en oeuvre pour réaliser le dispositif D5 de la figure 12A.

L'assemblage comporte six plaques, deux plaques d'extrémité P1000, P6000 et quatre plaques intermédiaires P2000, P3000, P4000, P5000 munies de découpes. Sur la plaque P3000, on peut voir les découpes 337 s'étendant sur sensiblement toute la longueur des plaques et formant les canaux d'échange thermique 336.

La plaque supérieure P6000 comporte avantageusement des saillies 338 alignées le long d'un bord au nombre de six correspondant au nombre de canaux d'échange thermique 336. Ces saillies permettent de repérer l'emplacement des piquages verticaux pour raccorder les canaux d'échange thermique 336 au circuit extérieur.

Dans les exemples représentés, les canaux de mélange ont des structures identiques. On pourrait prévoir que ceux-ci ne le soient pas, par exemple on pourrait envisager de réaliser un dispositif comportant des canaux de mélange de l'exemple de la figure 1 et des canaux de la figure 11C.

Dans les exemples représentés, les canaux de mélange sont connectés en série et sont donc le siège d'un seul type de réaction chimique entre au moins deux substances chimiques. On pourrait envisager de réaliser des canaux étanches et indépendants les uns des autres, et donc d'avoir des réactions chimiques différentes suivant les canaux.

Les dispositifs selon la présente invention présentent l'avantage d'être extrapolables en taille. En effet, on peut augmenter la section des canaux sans dégrader les performances thermiques. Ainsi, il suffit de modifier la taille des structures d'un dispositif pour s'adapter aux volumes de fluide à traiter, sans avoir à étudier les phénomènes d'échange thermique au sein du dispositif dont les dimensions ont été modifiées. Quelque soit la tailles des canaux, les propriétés de mélange, les propriétés thermiques et les propriétés hydrauliques sont conservées.

Grâce à l'invention et à la disposition particulière des canaux de mélange et des canaux d'échange thermique, les performances d'échange thermique sont améliorées de manière considérable.

## Revendications

1. Dispositif de mélange d'au moins deux fluides comportant un circuit de mélange (C1) desdits fluides et un circuit d'échange thermique (C2) dans lequel est destiné à circuler un caloporteur,
- ledit circuit de mélange (C1) comportant une pluralité de réseaux de canaux disposés les uns à côtés des autres, les canaux de chaque réseau étant interconnectés définissant une direction moyenne d'écoulement entre une première extrémité longitudinale et une deuxième extrémité longitudinale, les directions moyennes d'écoulement des la pluralité de réseau de canaux étant parallèles, chaque réseau comportant des portions communes d'écoulement sensiblement parallèles à la direction moyenne d'écoulement, des portions de séparation divisant en deux l'écoulement, les portions de séparation étant raccordées à une portion commune d'écoulement amont et une portion commune d'écoulement aval, chaque portion de séparation imposant au moins trois changements de direction d'écoulement,
- ledit circuit d'échange thermique (C2) comportant une pluralité de canaux distincts disposés les uns à côté des autres, lesdits canaux (36) étant disposés au sein du circuit de mélange (C1) et s'étendant d'une première extrémité transversale à une deuxième extrémité transversale de sorte que la direction moyenne d'écoulement transversale dans le circuit d'échange soit sensiblement perpendiculaire à la direction moyenne d'écoulement dans le circuit de mélange, chacun desdits canaux étant situé entre deux portions de séparation successives des réseaux de canaux du circuit de mélange,
- la direction moyenne d'écoulement longitudinale et la direction moyenne d'écoulement transversale définissant un plan moyen d'écoulement (P),
- au moins un changement de direction d'écoulement s'effectuant dans un plan distinct du plan moyen d'écoulement,
- ledit au moins un réseau de canaux (10) interconnectés du circuit de mélange (C1) étant délimité par un premier et un deuxième plan d'extrémité parallèles au plan moyen d'écoulement (P),
- ledit circuit d'échange thermique (C2) étant situé entre lesdits premier et deuxième plans d'extrémité.

2. Dispositif de mélange selon la revendication 1, dans lequel les canaux du circuit d'échange thermique (C2) comporte des portions communes et des portions de séparation se raccordant à des portions communes amont et aval, les portions de séparation s'étendant de part et d'autre des parties communes des réseaux du circuit de mélange (C2).

3. Dispositif de mélange selon la revendication 1, dans lequel le circuit d'échange thermique (C2) comporte deux canaux (36) parallèles distincts situés de part et d'autre du plan moyen d'écoulement (P).

4. Dispositif de mélange d'au moins deux fluides comportant un circuit de mélange (C1) desdits fluides et un circuit d'échange thermique (C2),
- ledit circuit de mélange (C1) comportant une pluralité de réseaux de canaux disposés les uns à côtés des autres, les canaux (310) de chaque réseau étant interconnectés, chaque réseau définissant une direction moyenne d'écoulement entre une première extrémité longitudinale et une deuxième extrémité longitudinale, ledit réseau comportant des portions communes d'écoulement sensiblement parallèles à la direction moyenne d'écoulement, des portions de séparation divisant en deux l'écoulement, les portions de séparation étant raccordées à une portion commune d'écoulement amont et une portion commune d'écoulement aval, chaque portion de séparation imposant au moins trois changements de direction d'écoulement, les directions moyennes d'écoulement de la pluralité de réseaux étant parallèles,
- ledit circuit d'échange thermique (C2) comportant une pluralité de canaux distincts, lesdits canaux (336) étant disposés au sein du circuit de mélange et s'étendant d'une première extrémité longitudinale à une deuxième extrémité longitudinale de sorte que l'écoulement moyen dans le circuit d'échange soit sensiblement parallèle à l'écoulement moyen dans le circuit mélange (C1), chacun desdits canaux étant situé à l'intérieur d'un espace délimité par les canaux formant les portions de séparation d'un réseau de canaux.
- la direction moyenne d'écoulement longitudinale et une direction d'écoulement transversale définissant un plan moyen d'écoulement,
- au moins un changement de direction d'écoulement s'effectuant dans un plan distinct du plan moyen d'écoulement,
- ledit au moins un réseau de canaux (310) interconnectés du circuit de mélange (C1) étant délimité par une première paire de plans d'extrémité parallèles entre eux et parallèles au plan moyen d'écoulement, et une deuxième paire de plans d'extrémité parallèles entre eux, la droite d'intersection avec l'un au moins des plans de la première et l'un au moins un plan de la deuxième paire de plans étant parallèle à la direction moyenne d'écoulement,
- ledit au moins un canal (336) du circuit d'échange thermique (C2) étant situé entre lesdits première et deuxième paires de plans d'extrémité.

5. Dispositif d'échange thermique selon la revendication 4, dans lequel le sens d'écoulement d'un fluide caloporteur dans le circuit d'échange thermique (C2) est opposé au sens d'écoulement dans le circuit de mélange (C1) sur au moins une partie du circuit d'échange thermique.

6. Dispositif de mélange selon la revendication 4 ou 5, dans lequel les réseaux du circuit de mélange (C1) sont connectés de sorte que les fluides à mélanger circulent au moins dans un premier sens d'écoulement et dans un deuxième sens d'écoulement.

7. Dispositif de mélange selon l'une des revendications 1 à 6, dans lequel ledit dispositif de mélange comportant une pluralité de plaques métalliques superposées et solidarisées par soudage diffusion, chacune des plaques étant gravée de sorte qu'elle comporte au moins une portion du circuit de mélange et/ou du circuit d'échange thermique.

8. Dispositif de mélange selon l'une des revendications 1 à 3, dans lequel le circuit d'échange thermique est formé par l'interposition de tuyaux métalliques (42) entre les plaques.

9. Dispositif de mélange selon l'une des revendications 1 à 3, dans lequel le circuit d'échange thermique (C2) est formé par des paires de rainures (44) réalisées dans des faces des plaques superposées se faisant face.

10. Dispositif de mélange selon la revendication 1, 2 ou 3, comportant des parois latérales et des parois d'extrémité longitudinale entourant l'empilement de plaques, les plaques d'extrémité longitudinale comportant des perçages de raccordement du circuit de mélange à un système d'alimentation en fluides à mélanger et les plaques latérales comportant des perçages de raccordement du circuit d'échange thermique à un système de circulation d'un fluide caloporteur.

11. Dispositif de mélange selon l'une des revendications 1 à 9, comportant des parois latérales (48) et des parois d'extrémité longitudinale (52) entourant l'empilement de plaques, les plaques d'extrémité longitudinale (52) comportant des perçages (56) de raccordement du circuit de mélange à un système d'alimentation en fluide à mélanger et du circuit d'échange thermique à un système de circulation d'un fluide caloporteur.

12. Dispositif de mélangeselon l'une des revendications 1 à 11, dans lequel au moins une des plaques de l'empilement comporte au niveau d'au moins une face d'extrémité longitudinale une saillie longitudinale (54) par réseau du circuit de mélange (C1), ladite saillie (54) étant alignée avec l'axe moyen dudit réseau associé, et dans lequel la plaque d'extrémité longitudinale (52) recouvrant cette face comporte des découpes pour recevoir chaque saillie longitudinale.

13. Dispositif de mélange selon l'une des revendications 1 à 12, dans lequel le circuit d'échange thermique est formé par l'interposition de tuyaux métalliques (42) entre les plaques, et dans lequel le dispositif est réalisé en en acier inoxydable et les tuyaux métalliques (42) sont en acier inoxydable.

14. Procédé de réalisation d'un dispositif de mélange selon l'une des revendications 1 à 13, comportant les étapes :
a) de découpe d'une pluralité de plaques métalliques de forme sensiblement parallélépipédique,
b) de découpe de motifs dans au moins une partie des plaques,
c) d'empilement des plaques de telle sorte que les motifs définissent les circuits de mélange et d'échange thermique,
d) de solidarisation desdites plaques par soudage-diffusion,
e) de découpe des faces longitudinales pour découvrir les extrémités des réseaux du circuit de mélange et permettre leurs connexions à un système d'alimentation.

15. Procédé de réalisation selon la revendication 14, dans lequel, lors de l'étape c), on interpose des tuyaux métalliques entre les plaques pour former le circuit d'échange thermique.

16. Procédé de réalisation selon la revendication 14 ou 15, dans lequel l'empilement de plaques réalisé à l'étape c) comporte des plaques métalliques pleines inférieure et supérieure, ledit procédé comportant une étape c') de mise en place de plaques latérales et de plaques d'extrémité longitudinale de sorte à former un conteneur étanche avec les plaques pleines supérieure et inférieure, et l'étape c") de dégazage de l'intérieur dudit conteneur.

17. Procédé de réalisation selon l'une des revendications 14 à 16, dans lequel l'étape d) est une étape de compression isostatique à chaud.

## Patentansprüche

1. Vorrichtung zum Mischen von wenigstens 2 Fluiden, umfassend einen Kreis (C1) zum Mischen der Fluide und einen Wärmetauschkreis (C2), der dazu ausgelegt ist, dass ein Wärmeträger darin zirkuliert,
- wobei der Mischkreis (C1) eine Mehrzahl von Netzen von Kanälen umfasst, die nebeneinander angeordnet sind, wobei die Kanäle jedes Netzes miteinander verbunden sind und eine mittlere Strömungsrichtung definieren zwischen einem ersten longitudinalen Ende und einem zweiten longitudinalen Ende, wobei die mittleren Strömungsrichtungen der Mehrzahl von Netzen von Kanälen parallel sind, wobei jedes Netz gemeinsame Strömungsbereiche umfasst, die im Wesentlichen parallel zur mittleren Strömungsrichtung sind, wobei Separationsbereiche die Strömung in zwei Teile unterteilen, wobei die Separationsbereiche mit einem stromaufwärtigen gemeinsamen Strömungsbereich und einem stromabwärtigen gemeinsamen Strömungsbereich verbunden sind, wobei jeder Separationsbereich wenigstens drei Strömungsrichtungsänderungen erzwingt,
- wobei der Wärmetauschkreis (C2) eine Mehrzahl von getrennten Kanälen umfasst, die nebeneinander angeordnet sind, wobei die Kanäle (36) innerhalb des Mischkreises (C1) angeordnet sind und sich von einem ersten transversalen Ende zu einem zweiten transversalen Ende derart erstrecken, dass die mittlere transversale Strömungsrichtung in dem Tauschkreis im Wesentlichen orthogonal ist zur mittleren Strömungsrichtung im Mischkreis, wobei jeder der Kanäle zwischen zwei aufeinanderfolgenden Separationsbereichen der Netze von Kanälen des Mischkreises angeordnet sind,
- wobei die mittlere longitudinale Strömungsrichtung und die mittlere transversale Strömungsrichtung eine mittlere Strömungsebene (P) definieren,
- wobei wenigstens eine Strömungsrichtungsänderung in einer Ebene erfolgt, die von der mittleren Strömungsebene getrennt ist,
- wobei das wenigstens eine Netz von miteinander verbundenen Kanälen (10) des Mischkreises (C1) durch eine erste und eine zweite Endebene begrenzt ist, die parallel zur mittleren Strömungsebene (P) sind,
- wobei der Wärmetauschkreis (C2) zwischen der ersten und der zweiten Endebene angeordnet ist.

2. Mischvorrichtung nach Anspruch 1, bei der die Kanäle des Wärmetauschkreises (C2) gemeinsame Bereiche und Separationsbereiche umfassen, die sich mit stromaufwärtigen und stromabwärtigen gemeinsamen Bereichen verbinden, wobei sich die Separationsbereiche auf beiden Seiten der gemeinsamen Bereiche der Netze des Mischkreises (C2) erstrecken.

3. Mischvorrichtung nach Anspruch 1, bei der der Wärmetauschkreis (C2) zwei getrennte parallele Kanäle (36) umfasst, die auf beiden Seiten der mittleren Strömungsebene (P) angeordnet sind.

4. Vorrichtung zum Mischen von wenigstens zwei Fluiden, umfassend einen Kreis (C1) zum Mischen der Fluide und einen Wärmetauschkreis (C2),
- wobei der Mischkreis (C1) eine Mehrzahl von Netzen von Kanälen umfasst, die nebeneinander angeordnet sind, wobei die Kanäle (310) jedes Netzes miteinander verbunden sind, wobei jedes Netz eine mittlere Strömungsrichtung zwischen einem ersten longitudinalen Ende und einem zweiten longitudinalen Ende definiert, wobei das Netz gemeinsame Strömungsbereiche umfasst, die im Wesentlichen parallel sind zur mittleren Strömungsrichtung, wobei Separationsbereiche die Strömung in zwei Teile unterteilen, wobei die Separationsbereiche mit einem stromaufwärtigen gemeinsamen Strömungsbereich und einem stromabwärtigen gemeinsamen Strömungsbereich verbunden sind, wobei jeder Separationsbereich wenigstens drei Strömungsrichtungsänderungen erzwingt, wobei die mittleren Strömungsrichtungen der Mehrzahl von Netzen parallel sind,
- wobei der Wärmetauschkreis (C2) eine Mehrzahl von getrennten Kanälen umfasst, wobei die Kanäle (336) innerhalb des Mischkreises angeordnet sind und sich von einem ersten longitudinalen Ende zu einem zweiten longitudinalen Ende derart erstrecken, dass die mittlere Strömung in dem Tauschkreis im Wesentlichen parallel zur mittleren Strömung in dem Mischkreis (C1) ist, wobei jeder der Kanäle innerhalb eines Raums angeordnet ist, der durch die Kanäle begrenzt ist, die die Separationsbereiche eines Netzes von Kanälen bilden,
- wobei die mittlere longitudinale Strömungsrichtung und eine transversale Strömungsrichtung eine mittlere Strömungsebene definieren,
- wobei wenigstens eine Strömungsrichtungsänderung in einer Ebene erfolgt, die von der mittleren Strömungsebene getrennt ist,
- wobei das wenigstens eine Netz von verbundenen Kanälen (310) des Mischkreises (C1) durch ein erstes Paar von Endebenen begrenzt wird, die zueinander parallel sind und parallel sind zur mittleren Strömungsebene, und durch ein zweites Paar von Endebenen, die zueinander parallel sind, wobei die Schnittgerade mit wenigstens einer der Ebenen des ersten und wenigstens einer Ebene des zweiten Paars von Ebenen parallel ist zur mittleren Strömungsrichtung,
- wobei der wenigstens eine Kanal (336) des Wärmetauschkreises (C2) zwischen dem ersten und dem zweiten Paar von Endebenen angeordnet ist.

5. Wärmetauschvorrichtung nach Anspruch 4, bei der die Strömungsrichtung eines Wärmeträgerfluids in dem Wärmetauschkreis (C2) wenigstens in einem Teil des Wärmetauschkreises entgegengesetzt ist zur Strömungsrichtung im Mischkreis (C1).

6. Mischvorrichtung nach Anspruch 4 oder 5, bei der die Netze des Mischkreises (C1) derart verbunden sind, dass die zu mischenden Fluide wenigstens in einer ersten Strömungsrichtung und in einer zweiten Strömungsrichtung zirkulieren.

7. Mischvorrichtung nach einem der Ansprüche 1 bis 6, bei der die Mischvorrichtung eine Mehrzahl von Metallplatten umfasst, die überlagert und durch Diffusionsschweißen verbunden sind, wobei jede der Platten derart graviert ist, dass sie wenigstens einen Bereich des Mischkreises und/oder des Wärmetauschkreises umfasst.

8. Mischvorrichtung nach einem der Ansprüche 1 bis 3, bei der der Wärmetauschkreis durch Einfügen von Metallrohren (42) zwischen die Platten gebildet ist.

9. Mischvorrichtung nach einem der Ansprüche 1 bis 3, bei der der Wärmetauschkreis (C2) durch Paare von Rillen (44) gebildet ist, die in den Flächen von sich gegenüberliegenden überlagerten Platten realisiert sind.

10. Mischvorrichtung nach Anspruch 1, 2 oder 3, umfassend laterale Wände und longitudinale Endwände, die den Stapel von Platten umgeben, wobei die longitudinalen Endplatten Bohrungen zum Anschluss des Mischkreises an ein System zur Versorgung mit zu mischenden Fluiden umfassen, und die lateralen Platten Bohrungen zum Anschluss des Wärmetauschkreises an ein System zum Zirkulieren eines Wärmeträgerfluids umfassen.

11. Mischvorrichtung nach einem der Ansprüche 1 bis 9, umfassend laterale Wände (48) und longitudinale Endwände (52), die den Stapel von Platten umgeben, wobei die longitudinalen Endplatten (52) Bohrungen (56) zum Anschluss des Mischkreises an ein System zur Versorgung mit zu mischenden Fluiden sowie des Wärmetauschkreises an ein System zum Zirkulieren eines Wärmeträgerfluids umfassen.

12. Mischvorrichtung nach einem der Ansprüche 1 bis 11, bei der wenigstens eine der Platten des Stapels im Bereich wenigstens einer longitudinalen Endfläche einen longitudinalen Vorsprung (54) pro Netz des Mischkreises (C1) umfasst, wobei der Vorsprung (54) mit der mittleren Achse des zugeordneten Netzes ausgerichtet ist, und bei der die longitudinale Endplatte (52), die diese Fläche bedeckt, Ausschneidungen umfasst, um jeden longitudinalen Vorsprung aufzunehmen.

13. Mischvorrichtung nach einem der Ansprüche 1 bis 12, bei der der Wärmetauschkreis durch Einfügen von Metallrohren (42) zwischen die Platten gebildet ist, und bei der die Vorrichtung aus einem rostfreien Stahl realisiert ist, und die Metallrohre (42) aus rostfreiem Stahl sind.

14. Verfahren zur Herstellung einer Mischvorrichtung nach einem der Ansprüche 1 bis 13, umfassend die Schritte:
a) Ausschneiden einer Mehrzahl von Metallplatten in im Wesentlichen parallelepipedförmiger Gestalt,
b) Ausschneiden von Motiven aus wenigstens einem Teil der Platten,
c) Stapeln der Platten derart, dass die Motive den Mischkreis und den Wärmetauschkreis definieren,
d) Verbinden der Platten durch Diffusionsschweißen,
e) Ausschneiden der longitudinalen Flächen, um die Enden der Netze des Mischkreises freizulegen und ihre Verbindungen mit einem Versorgungssystem zu ermöglichen.

15. Verfahren zur Herstellung nach Anspruch 14, bei dem man während des Schritts c) Metallrohre zwischen die Platten einfügt, um den Wärmetauschkreis zu bilden.

16. Verfahren zur Herstellung nach Anspruch 14 oder 15, bei dem der im Schritt c) realisierte Stapel von Platten untere und obere Vollmetallplatten umfasst, wobei das Verfahren einen Schritt c') des Platzierens von lateralen Platten und von longitudinalen Endplatten derart umfasst, dass ein dichter Behälter mit den oberen und unteren Vollplatten gebildet wird, sowie den Schritt c") des Entgasens des Inneren des Behälters.

17. Verfahren zur Herstellung nach einem der Ansprüche 14 bis 16, bei dem der Schritt d) ein isostatischer Heißkompressionsschritt ist.

## Claims

1. A device for blending at least two fluids comprising a circuit (C1) for blending said fluids and a heat exchange circuit (C2) wherein a heat transfer fluid is intended to flow,
- said blending circuit (C1) comprising multiple channel networks positioned side-by-side, he channels of each network being interconnected, defining an average flow direction between a first longitudinal end and a second longitudinal end, the average flow directions of the multiple networks of channels being parallel, each network comprising common flow portions which are roughly parallel to the average flow direction, separation portions dividing the flow into two, the separation portions being connected to a common upstream flow portion and a common downstream flow portion, and each separation portion forcing at least three changes of flow direction,
- said heat exchange circuit (C2) comprising multiple separate channels positioned side-by-side, said channels (36) being positioned within the blending circuit (C1), and extending from a first transverse end to a second transverse end, such that the average transverse flow direction in the exchange circuit is roughly perpendicular to the average flow direction in the blending circuit, and each of said channels being positioned between two successive separation portions of the networks of channels of the blending circuit,
- the average longitudinal flowing direction and the average transverse flow direction defining an average flow plane (P),
- at least one change of flow direction occurring in a plane separate from the average flow plane,
- said at least one network of interconnected channels (10) of the blending circuit (C1) being delimited by a first and a second end plane, both parallel to the average flow plane (P),
- said heat exchange circuit (C2) being positioned between said first and second end planes.

2. A blending device according to claim 1, wherein the channels of the heat exchange circuit (C2) comprise common portions and separation portions connecting to upstream and downstream common portions, where the separation portions extend either side of the common portions of the networks of the blending circuit (C2) .

3. A blending device according to claim 1, wherein the heat exchange circuit (C2) comprises two separate parallel channels (36) located either side of the average flow plane (P).

4. A device for blending at least two fluids comprising a circuit (C1) for blending said fluids and a heat exchange circuit (C2),
- said blending circuit (C1) comprising multiple channel networks positioned side-by-side, the channels (310) of each network being interconnected, each network defining an average flow direction between a first longitudinal end and a second longitudinal end, said network comprising common flow portions which are roughly parallel to the average flow direction, separation portions dividing the flow into two, the separation portions being connected to a common upstream flow portion and a common downstream flow portion, each separation portion forcing at least three changes of flow direction, and the average flow directions of the multiple networks being parallel,
- said heat exchange circuit (C2) comprising multiple separate channels, said channels (336) being positioned within the blending circuit and extending from a first longitudinal end to a second longitudinal end, such that the average flow in the exchange circuit is roughly parallel to the average flow in the blending circuit (C1), each of said channels being positioned inside a space delimited by the channels forming the separation portions of a network of channels.
- the average longitudinal flow direction and a transverse flow direction defining an average flow plane,
- at least one change of flow direction occurring in a plane separate from the average flow plane,
- said at least one network of interconnected channels (310) of the blending circuit (C1) being delimited by a first pair of end planes which are parallel to one another, and parallel to the average flow plane, and a second pair of end planes which are parallel to one another, and the straight line intersecting with at least one of the planes of the first and at least one plane of the second pair of planes being parallel to the average flow direction,
- said at least one channel (336) of the heat exchange circuit (C2) being positioned between said first and second pairs of end planes.

5. A heat exchange device according to claim 4, wherein the direction of flow of a heat transfer fluid in the heat exchange circuit (C2) is opposite the direction of flow in the blending circuit (C1) over at least a part of the heat exchange circuit.

6. A blending device according to claim 4 or 5, wherein the networks of the blending circuit (C1) are connected such that the fluids to be blended flow at least in a first flow direction and in a second flow direction.

7. A blending device according to one of the claims 1 to 6, wherein said blending device comprises multiple superimposed metal plates, connected by diffusion welding, each of the plates being etched such that it comprises at least a portion of the blending circuit and/or of the heat exchange circuit.

8. A blending device according to one of the claims 1 to 3, wherein the heat exchange circuit is formed by the interposition of metal pipes (42) between the plates.

9. A blending device according to one of the claims 1 to 3, wherein the heat exchange circuit (C2) is formed by pairs of grooves (44) produced in faces of opposite superimposed plates.

10. A blending device according to one of the claims 1 to 9, comprising side walls (48) and longitudinal end walls (52) surrounding the stack of plates, the longitudinal end plates (52) comprising piercings (56) to connect the blending circuit to a system supplying the fluid for blending, and to connect the heat exchange circuit to a system which causes a heat exchange fluid to flow.

11. A blending device according to one of the claims 1 to 9, comprising side walls and longitudinal end walls surrounding the stack of plates, the longitudinal end plates comprising piercings to connect the blending circuit to a system supplying the fluid for blending, and the side walls comprise piercings to connect the heat exchange circuit to a system which causes a heat exchange fluid to flow.

12. A blending device according to one of the claims 1 to 11, wherein at least one of the plates of the stack comprises, in at least one longitudinal end face, one longitudinal protrusion (54) for each network of the blending circuit (C1), said protrusion (54) being aligned with the average axis of said associated network, and wherein the longitudinal end plate (52) covering this face comprises slots to receive each longitudinal protrusion.

13. A blending device according to one of the claims 1 to 12, wherein the heat exchange circuit is formed by the interposition of metal pipes (42) between the plates and wherein the device is manufactured from stainless steel and the metal pipes (42) are made from stainless steel.

14. A method for production of a blending device according to one of the claims 1 to 13, comprising the following steps:
a) cutting of multiple metal plates of roughly parallelepipedic shape,
b) cutting of patterns in at least a part of the plates,
c) stacking of the plates such that the patterns define the blending and heat exchange circuits,
d) connection of said plates by diffusion welding,
e) cutting of the longitudinal faces to reveal the ends of the networks of the blending circuit, and to enable them to be connected to a supply system.

15. A method according to claim 13, wherein, in step c), metal pipes are interposed between the plates to form the heat exchange circuit.

16. A method of production according to claim 14 or 15, wherein the stack of plates produced in step c) comprises lower and upper metal plates containing no cut-outs, where said method comprises a step c') of installation of side plates and of longitudinal end plates, so as to form a sealed container with the upper and lower plates with no cut-outs, and step c") of degassing of the interior of said container.

17. A method of production according to one of the claims 14 to 16, wherein step d) is a hot isostatic pressing step.
